# EUROPÄISCHE PATENTSCHRIFT

(11) **EP 3 103 700 B1**
(45) Veröffentlichungstag und Bekanntmachung des Hinweises auf die Patenterteilung: **14.11.2018**
(21) Anmeldenummer: 16172099.0
(22) Anmeldetag: 31.05.2016
(51) Int. Cl.: B62B 15/00, A63C 17/28, B62B 17/06, B62B 17/08

(54) **FAHRZEUG, INSBESONDERE KITE-BUGGY**
VEHICLE, IN PARTICULAR KITE BUGGY
VEHICULE, NOTAMMENT VEHICULE DE KITE-BUGGY

(30) Priorität: 08.06.2015 DE 102015108939
(43) Veröffentlichungstag der Anmeldung: 14.12.2016
(73) Patentinhaber: Rombey, Michael, 79837 Häusern (DE)
(72) Erfinder: Rombey, Michael, 79837 Häusern (DE)
(74) Vertreter: Müller, Jochen

(56) Entgegenhaltungen:
- DE-A1-102011 102 940
- FR-A3- 2 796 352
- US-A1- 2006 207 807
- US-A1- 2013 175 790

## Beschreibung

Die Erfindung bezieht sich auf ein Fahrzeug, insbesondere Kite-Buggy, mit einer lenkbaren Vorderradanordnung und mindestens einer Hinterradanordnung.

Die DE 10 2005 017 354 A1 offenbart ein Leichtfahrzeug in Form eines Buggys mit einer einrädrigen Vorderachsanordnung, einer zweirädrigen Hinterachsanordnung, einer Rahmeneinrichtung und einer Sitzeinrichtung für einen Fahrer, wobei die Rahmeneinrichtung einen hinteren Querholm, einen linken und einen rechten Längsholm sowie eine Lenkereinrichtung zur gelenkigen Anbindung der Vorderachse an die Rahmeneinrichtung umfasst. Die gefederte Vorderradaufhängung ist als eine Gabeleinrichtung ausgeführt, an der zur Aufbringung der Lenkkräfte eine Fußrastenanordnung angebracht ist.

Die US 2006/0207807 A1 offenbart ein Fahrzeug gemäß dem Oberbegriff von Anspruch 1.

Der Erfindung liegt die Aufgabe zugrunde, ein Fahrzeug der eingangs genannten Art zu schaffen, das über einen Lenkdrachen mittels Windenergie antreibbar und sowohl in einem Transportzustand als auch bei Gebrauch relativ einfach und zuverlässig handhabbar ist.

Erfindungsgemäß wird die Aufgabe durch die Merkmale des unabhängigen Anspruchs gelöst.

Die Unteransprüche stellen vorteilhafte Ausgestaltungen der Erfindung dar.

Ein Fahrzeug, insbesondere Kite-Buggy, umfasst eine lenkbare Vorderradanordnung und mindestens eine Hinterradanordnung. Die Vorderradanordnung und die Hinterradanordnung sind an einer wannenförmigen Sitzschale angeordnet, wobei die Sitzschale an einem Ende zur Abstützung eines Lendenwirbelbereichs ausgebildet ist, in einen Wannenbereich zur Beinauflage übergeht und eine arretierbare Scharnieranordnung zum Verschwenken der Vorderradanordnung in die Sitzschale umfasst.

Bei dem Fahrzeug im Rahmen der Erfindung handelt es sich um einen so genannten Kite-Buggy, in dem der Fahrer sitzt und das Vorderrad mit seinen Füßen lenkt. Mit seinen Händen hält er einen Lenkdrachen und steuert diesen.

Die Sitzschale ist anatomisch geformt und stützt den Körper des Fahrers zur optimierten Kraftübertragung sowohl nach hinten im Lendenwirbelbereich als auch seitlich sowohl im Bereich des Gesäßes als auch der Beine. Im Weiteren ist die Sitzschale derart ausgebildet, dass sie den Fahrer vor Verletzungen schützt, da sie bei Gebrauch des Fahrzeugs nur einen relativ geringen Abstand zu einem Untergrund aufweist. Durch den tiefen Schwerpunkt und die Aufnahme des Fahrers in der Sitzschale ist eine zuverlässige Handhabung des Fahrzeugs in seiner Gebrauchslage gegeben.

Um das Fahrzeug auch bei einem Nichtgebrauch, beispielsweise zum Transport, einfach handhaben zu können, ist die Sitzschale mit einer Scharnieranordnung versehen, die ein Zusammenklappen des Fahrzeugs nach dem Lösen der Arretierung ermöglicht, wobei die Vorderradanordnung in die Sitzschale geklappt wird. Durch die Arretierung der Scharnieranordnung in der Gebrauchslage des Fahrzeugs ist dessen Stabilität sichergestellt und ein unbeabsichtigtes Öffnen der Scharnieranordnung vermieden.

Die Hinterradanordnung kann ein einzelnes Hinterrad oder mehrere Hinterräder umfassen. Auch bei der Vorderradanordnung kann sowohl ein einzelnes Vorderrad vorgesehen sein, als auch beispielsweise zwei parallel zueinander angeordnete Vorderräder, die zum Lenken relativ zueinander verlagerbar sind. Neben einer dreirädrigen Ausführung ist auch eine Ausgestaltung mit zwei Rädern möglich, so dass der Buggy als ein Kite-Bike zu bezeichnen ist.
Nach einer Weiterbildung umfasst die Scharnieranordnung mindestens ein Scharnier, das aus einem Gewebematerial im oberen Randbereich der Sitzschale gebildet ist und die Arretierung umfasst eine Bolzenanordnung mit Arretierbolzen auf der einen Seite der Sitzschale, wobei die Arretierbolzen in zugeordnete Arretieröffnungen auf der anderen Seite der Sitzschale in einer in eine Gebrauchslage der Vorderradanordnung verschwenkten Lage eingreifen. Von dem im Wesentlichen ein Gewebematerial umfassenden Scharnier geht insbesondere keine Verletzungsgefahr für den Fahrer aus. Auch bei einer Verunreinigung, beispielsweise durch Sand, ist die Funktionalität des Scharniers gegeben. Die Scharnieranordnung kann derart gestaltet sein, dass sie zwei zueinander beabstandete Scharniere, also Gelenke, aufweist, zwischen denen ein starrer Bereich ausgebildet ist, so dass die beiden zueinander verschwenkbaren Teile der Sitzschale im Bereich der Scharnieranordnung im Transportzustand nicht unmittelbar aufeinanderliegen. Vorteilhafterweise sind die Arretierbolzen mittels eines über Umlenkrollen geführten Seilzugs, der mit einem verschwenkbaren Betätigungshebel verbunden ist, derart verlagerbar, dass die dem einen Teil der Sitzschale zugeordneten Arretierbolzen in der einen Endlage mit dem gegenüberliegenden Teil der Sitzschale zugeordneten Arretieröffnungen zur Arretierung der Sitzschale in der Gebrauchsstellung zusammenwirken und in der anderen Endlage außer Eingriff mit den Arretieröffnungen bringbar sind. Der Seilzug mit den Umlenkrollen ist durch einen Bowdenzug ersetzbar. Wesentlich ist die Möglichkeit der Verlagerung der Arretierbolzen, um eine Verriegelung zwischen den beiden zueinander verschwenkbaren Teilen der Sitzschale zu schaffen bzw. zu lösen. Die Arretierbolzen und Arretieröffnungen sind über den Umfang der Sitzschale verteilt angeordnet.

Um die Handhabung zu vereinfachen, ist mindestens ein Fallenschloss zwischen den beiden zueinander zu verschwenkenden Teilen der Sitzschale angeordnet. Das Fallenschloss kommt in der Gebrauchslage der Sitzschale in Eingriff, so dass der Benutzer des Fahrzeugs anschließend die Arretierung mittels der Arretierbolzen vornehmen kann. Nach dem Lösen der Arretierung mittels der Arretierbolzen wird das Fallenschloss geöffnet und die beiden Teile der Sitzschale sind zueinander verschwenkbar.

Alternativ sind die federbeaufschlagten Arretierbolzen über den Seilzug derart miteinander verbunden, dass sie beim Verschwenken des Betätigungshebels entgegen der Federwirkung außer Eingriff mit den Arretieröffnungen in eine in ein Lagergehäuse eingezogene Stellung gebracht werden und nach dem Loslassen des Betätigungshebels aufgrund der Federwirkung in eine aus dem Lagergehäuse ausgefahrene Stellung zurückkehren. Aufgrund des mit dem Betätigungshebel verbundenen Seilzugs sind mehrere Arretierbolzen gleichzeitig mittels einer Einhandbedienung zu lösen. Die Arretierbolzen und Arretieröffnungen sind über den Umfang der Sitzschale verteilt angeordnet.

Bevorzugt ist die Sitzschale im Anlenkungsbereich der Hinterradanordnung zur Aufnahme der Gesäßregion ausgebildet, wobei in diesem hinteren Bereich der Sitzschale der tiefste Punkt unterhalb der Achse mindestens eines der Hinterräder angeordnet ist. Durch die tiefe Lage des Gesäßes des Fahrers aufgrund der muldenförmigen Sitzschale ist eine ermüdungsfreie Sitzposition geschaffen, in der eine verlustarme Übertragung der Zugkraft des Lenkdrachen über den Fahrer, der auch als Pilot bezeichnet wird, auf das Fahrzeug ermöglicht wird.

Zur leichten und dennoch stabilen Fertigung ist zweckmäßigerweise die Sitzschale aus einem faserverstärkten Kunststoffmaterial gefertigt. Demnach weist die Sitzschale bei einer großen Festigkeit ein verhältnismäßig geringes Gewicht auf. Insbesondere eine in der Gebrauchslage in Richtung des Bodens weisende Unterseite der Sitzschale kann zum weitergehenden Schutz des Fahrers vor Verletzungen mit einem Glas- oder Kohle- oder Aramidfasergewebe oder -fasergewirke verstärkt sein.

Nach einer Weiterbildung ist in der Sitzschale eine Polsterung angeordnet, die an die Körperkontur eines Insassen anpassbar ist. Hierbei kann beispielsweise eine Polsterung mit einer eine Schüttung in Form kleiner Kugeln oder einem offenzelligen Polstermaterial oder dergleichen aufnehmenden luftundurchlässigen Außenhülle, in die beispielsweise ein Ventil eingesetzt ist, verwendet werden, wobei nach dem Platzieren des Insassen die Luft aus der Außenhülle evakuiert werden kann und sich die Polsterung an den Körper des Insassen anschmiegt. Die Polsterung kann alternativ auch derart ausgebildet sein, dass sie sich bei einer Belastung durch einen Insassen unter einem Entweichen der Luft an die in den in die Oberfläche der Polsterung eindringende Kontur des Körpers des Insassen anpasst, die Kontur auch nach der Belastung aufgrund eines Unterdruckes in der Polsterung beibehält und sich nach einem unbelasteten Aufschütteln unter Aufhebung des Unterdrucks mit Luft füllt und wieder beliebig formbar ist. Eine solche Polsterung weist einen besonderen Stabilisierungseffekt auf. Im Inneren der Polsterung entsteht ein Unterdruck durch mindestens eine luftundurchlässige Außenhülle und relativ schlecht luftdurchlässige Nähte. Die Polsterung stabilisiert nach einer verhältnismäßig kurzen Zeitspanne nach der Einnahme einer bestimmten Position die entsprechende Haltung des Insassen durch einen spürbaren Unterdruck. Dazu ist es erforderlich, dass die eingenommene Position zunächst beibehalten wird. Vor jeder Verwendung der Polsterung wird zunächst ein eventuell noch vorhandener Unterdruck durch Aufschütteln der Polsterung beseitigt. Die Polsterung füllt sich im unbelasteten Zustand nach einer bestimmten Zeitspanne, die ca. 2 min beträgt, mit Luft.

In Ausgestaltung ist jedes der Hinterräder mittels einer Befestigungsschwinge der Hinterradanordnung mit der Sitzschale derart verbunden, dass die Befestigungsschwinge von einem sitzschalenfesten Befestigungsansatz lösbar ist und ein Federelement aufweist oder als ein Federelement ausgebildet ist. Zweckmäßigerweise sind die Hinterräder von Achsen der Befestigungsschwingen lösbar. Die Montage bzw. Demontage erfolgt bevorzugt werkzeuglos. Die Federelemente können beispielsweise austauschbar sein, um die Federeigenschaften zu variieren. Beispielsweise ist an der Sitzschale das Federelement oder ein Tragstummel angeformt oder befestigt an dem mittels einer zu sichernden Steckverbindung die Befestigungsschwinge, vorzugsweise kraftschlüssig, anordenbar ist.

Vorteilhafterweise weist die Sitzschale in ihrem zum Vorderrad weisenden Bereich auf gegenüberliegenden Seiten zwei Pedale auf, die mit einem Seilzugsystem zur Lenkung des Vorderrades verbunden sind, und/oder lagert mindestens ein Bremspedal. Die Pedale zum Lenken des Fahrzeugs sind einem unfallsicheren Bereich innerhalb der Sitzschale angeordnet. Die Pedale können wippend, also in zwei Richtungen schwenkbar, gelagert sein. Um den Betätigungsweg und die Betätigungskraft der Pedale in Abhängigkeit von einem Lenk- bzw. Einschlagwinkel zu variieren, ist es möglich, einen Lenkkopf im Querschnitt oval zu gestalten. Bei einem im Querschnitt runden Lenkkopf, der selbstverständlich im Rahmen der Erfindung einsetzbar ist, erfolgt keine Änderung des Betätigungswegs bzw. der Betätigungskraft des Pedals in Abhängigkeit zum Lenkwinkel, vielmehr stehen die Wege und Kräfte in einem unmittelbaren linearen Verhältnis zueinander. Das mindestens eine Bremspedal ist derart angeordnet, dass es beim Lenken des Fahrzeugs zu beaufschlagen ist, also beispielsweise der Fuß des Fahrers gleichzeitig zum Lenken und zum Bremsen des Fahrzeugs das jeweilige Pedal beaufschlagt. Hierbei ist es möglich, ein Bremspedal derart anzuordnen, dass es mit beiden Füßen erreichbar ist.

Alternativ zu dem zuvor erläuterten Seilzugsystem sind vorzugsweise die mit der Hydraulikeinrichtung zur Lenkung des Vorderrades verbundenen Pedale mit jeweils einem durch eine Betätigung mit dem zugeordneten Pedal in seinem Volumen verringerbaren Behälter für eine Hydraulikflüssigkeit gekoppelt sind, wobei jeder Behälter über eine Hydraulikleitung mit einem einem Lenkkopf der Lenkung zugeordneten hydraulischen Betätiger zu dessen Verdrehung zugeordnet ist. Die Pedale dienen im Wesentlichen als Tritt- oder Betätigungsflächen und zum Schutz des Behälters, der beispielsweise als Faltenbalg aus einem Elastomer oder dergleichen gebildet sein kann. Selbstverständlich ist auch die Anordnung eines Hydraulikzylinders mit einem darin aufgenommenen Kolben mit zugeordneter Kolbenstange möglich, wobei durch das Pedal eine Verlagerung der Kolbenstange zu dem Kolben erfolgt, um die in dem Kolben aufgenommene Flüssigkeit in den Betätiger zu verlagern, der mit dem Lenkkopf zur Verdrehung selbstverständlich auch des zugeordneten Vorderrades in Wirkverbindung steht.

Bevorzugt umfasst die Vorderradanordnung eine federnd gelagerte oder eine ein Federelement aufweisende Einarmschwinge sowie eine hydraulisch betätigte Scheibenbremse, die unter einer Vorderradschutzhaube angeordnet ist. Durch die Federung sämtlicher Räder des Fahrzeugs und die Bereitstellung der hydraulischen Scheibenbremse wird ein hohes Maß an Sicherheit erzielt. Die Einarmschwinge stellt eine relativ gute Erreichbarkeit des Vorderrades und der Scheibenbremse sicher.

Zweckmäßigerweise umfasst die Vorderradanordnung ein Lenkkopflager, das mit dem Seilsystem zusammenwirkt. Das Lenkkopflager umfasst ein einziges Lager, das relativ dünn und groß im Durchmesser bemessen ist.

Nach einer Weiterbildung sind mindestens ein Vorderrad der Vorderradanordnung und mindestens ein Hinterrad der Hinterradanordnung durch eine Kufe zum Eisgleiten, einen Ski zum Schneegleiten, oder ein Tragprofil zum Wassergleiten ersetzbar.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand eines Ausführungsbeispiels unter Bezugnahme auf die zugehörige Zeichnung näher erläutert.

Es zeigt:

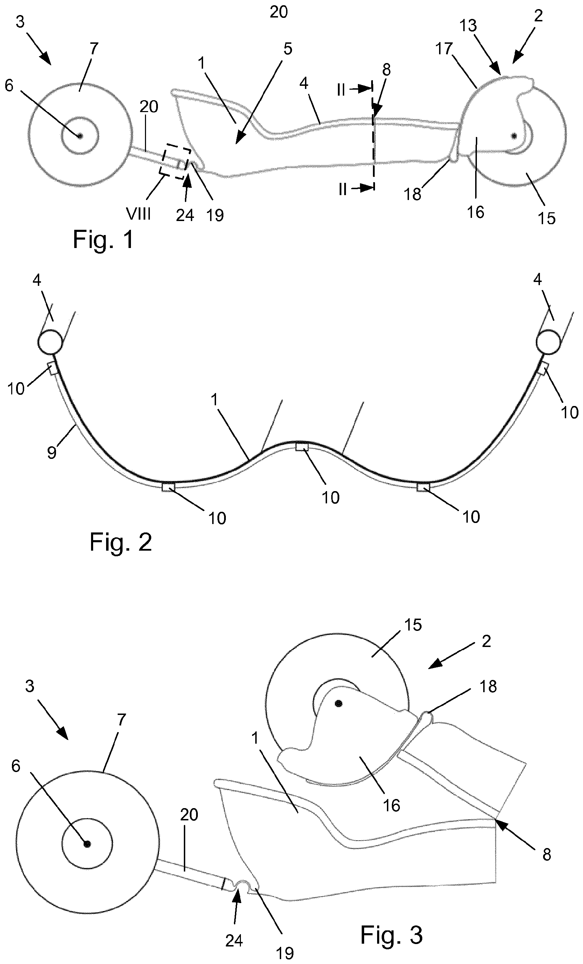

- Fig. 1: eine schematische Seitenansicht des Fahrzeugs nach der Erfindung,
- Fig. 2: eine Schnittdarstellung gemäß der Linie II-II nach Fig. 1,
- Fig. 3: eine schematische Seitenansicht des Fahrzeugs nach Fig. 1 in einer teilweise zusammengeklappten Transportlage,

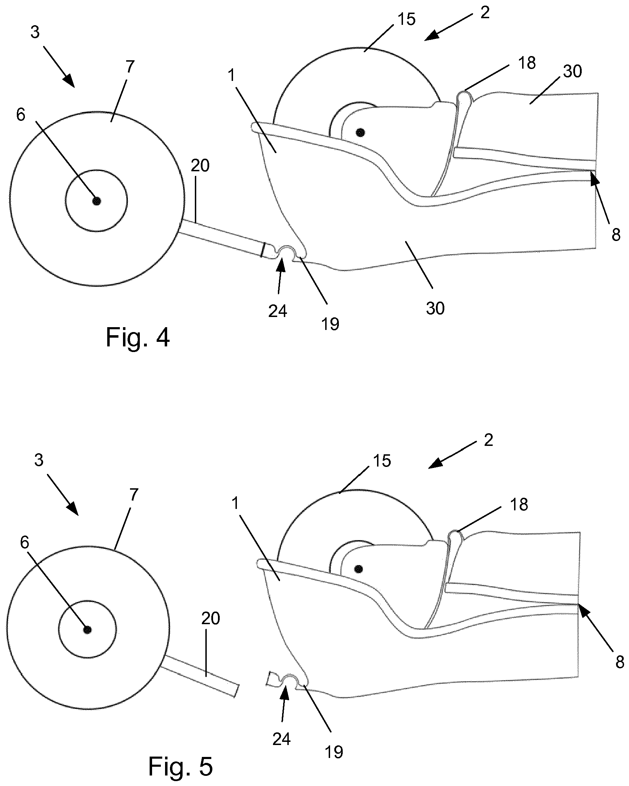

- Fig. 4: eine schematische Seitenansicht des Fahrzeugs nach Fig. 1 in der Transportlage,
- Fig. 5: eine Darstellung des Fahrzeugs nach Fig. 4 mit einer demontierten Hinterradanordnung,

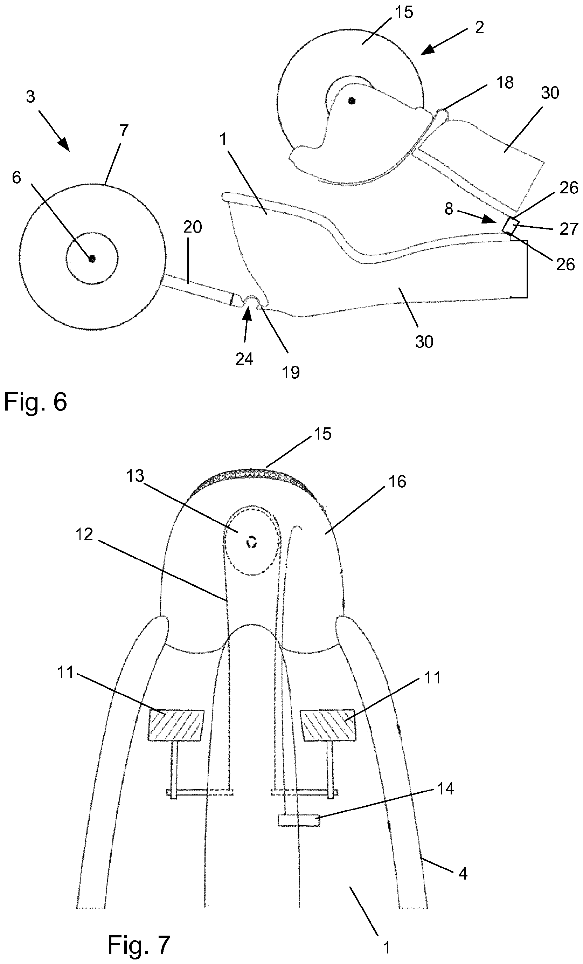

- Fig. 6: eine Darstellung des Fahrzeugs nach Fig. 3 in alternativer Ausgestaltung,
- Fig. 7: eine schematische Teildarstellung einer Draufsicht nach Fig. 1,

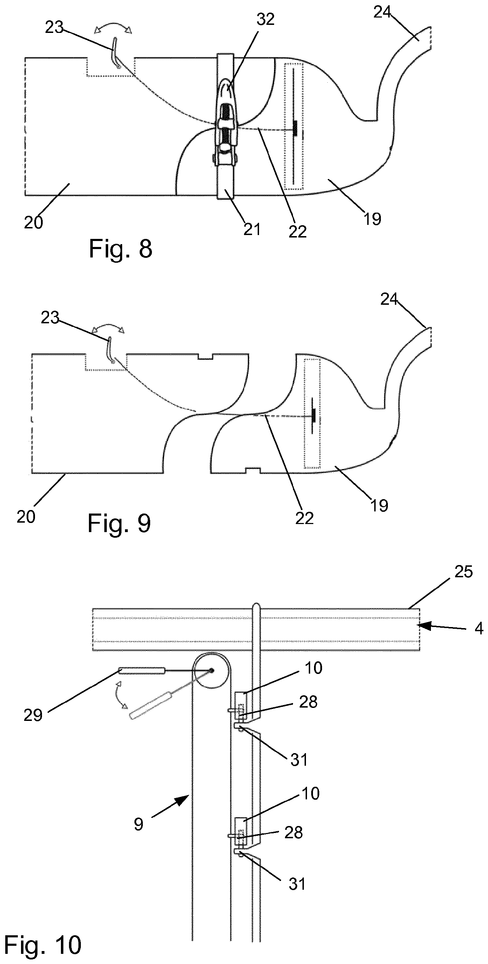

- Fig. 8: eine schematische Darstellung einer Einzelheit VIII nach Fig. 1 im fixierten Zustand der Hinterradanordnung und
- Fig. 9: eine schematische Darstellung der Einzelheit VIII nach Fig. 1 im gelösten Zustand der Hinterradanordnung,
- Fig. 10: eine Teildarstellung der Darstellung nach Fig. 2 in einer Draufsicht,
- Fig. 11: eine schematische Darstellung des Fahrzeugs nach Fig. 3 in alternativer Ausgestaltung,
- Fig. 12: eine schematische Darstellung des Fahrzeugs nach Fig. 7 in alternativer Ausgestaltung und
- Fig. 13: eine vergrößerte schematische Darstellung der Einzelheit XIII nach Fig. 12.

Das als ein so genannter Kite-Buggy ausgebildete Fahrzeug umfasst im Wesentlichen eine Sitzschale 1, an der eine Vorderradanordnung 2 und zwei Hinterradanordnungen 3 befestigt sind. Die Sitzschale 1 ist aus einem faserverstärkten Kunststoff gefertigt und wannenförmig ausgebildet, wobei ein oberseitiger Rand 4 mit einem insbesondere runden Querschnitt vorgesehen ist, der zum einen die Stabilität der Sitzschale 1 erhöht und die Verletzungsgefahr für einen Fahrer oder Piloten aufgrund der konsequenten Vermeidung scharfer Kanten reduziert. Der oberseitige Rand 4 ist mit einem Schaumstoffüberzug 25 als Prallschutz versehen oder rohrförmig ausgebildet. Im Bereich der Hinterradanordnungen 3 ist die Sitzschale 1 zur Abstützung eines Lendenwirbelbereichs des Fahrers ausgebildet und weist in diesem hinteren Bereich eine Mulde 5 zur Aufnahme der Gesäßregion des Fahrers auf, deren tiefster Punkt unterhalb einer Achse 6 eines Hinterrads 7 angeordnet ist. Ausgehend von der Mulde 5 erstreckt sich die Sitzschale 1 unter Ausbildung einer Beinauflage in Richtung der Vorderradanordnung 2.

Im Bereich eines vorderen Drittels der Sitzschale 1 ist eine Scharnieranordnung 8 vorgesehen, die lösbar arretierbar ist, um das vordere Drittel der Sitzschale 1 mit der daran befestigten Vorderradanordnung 2 aus einer Gebrauchslage in eine Transportlage zu verschwenken, in der die Vorderradanordnung 2 in den hinteren Zweidritteln der Sitzschale 1 einliegt, wobei ein Scharnier 26 der Scharnieranordnung 8 aus einem an dem oberseitigen Rand 4 befestigten Gewebematerial besteht. In alternativer Ausgestaltung umfasst eine Scharnieranordnung 8 auf einer Seite der Sitzschale 1 zwei mittels eines Zwischengliedes 27 zueinander beabstandete Scharniere 26.

Zur lösbaren Arretierung ist eine Bolzenanordnung vorgesehen, die Arretierbolzen 28 auf der einen Seite der Sitzschale 1 umfasst, die in der Gebrauchslage der Sitzschale 1 in zugeordnete Arretieröffnungen 31 auf der anderen Seite der Sitzschale 1 eingreifen. Die Arretierbolzen 28 sind über einen Seilzug 9 derart miteinander verbunden, dass sie beim Verschwenken eines Betätigungshebels 29 in seine eine Endlage in Eingriff mit den Arretieröffnungen 29 und beim Verschwenken des Betätigungshebels 29 in seine andere Endlage in eine in ein Lagergehäuse 10 eingezogene Stellung gebracht werden. Zur Vereinfachung der Handhabung kann zwischen den beiden zu verschwenkenden Teilen 30 der Sitzschale 1 ein nicht dargestelltes Fallenschloss mit einer federbeaufschlagten Schlossfalle angeordnet sein, um eine erste Verriegelung der beiden Teile 30 der Sitzschale 1 in der Gebrauchslage zu realisieren.

Zur Steuerung des Fahrzeugs sind innerhalb der Sitzschale 1 zwei Pedale 11 gelagert, die über ein Seilzugsystem 12 mit einem Lenkkopf 13 der Vorderradanordnung 2 zusammenwirken. Damit ein Bremsen des Fahrzeugs möglich ist, ist im Bereich der beiden Pedale 11 ein Bremspedal 14 innerhalb der Sitzschale 1 vorgesehen, das von beiden Seiten, also sowohl mit dem rechten als auch dem linken Fuß des Fahrers zu betätigen ist. Das Bremspedal 14 kann mittig in der Sitzschale 1 gelagert werden und beidseitig Fortsätze aufweisen. Das Bremspedal 14 ist mit einer hydraulischen Bremsanlage einer mit einem Vorderrad 15 der Vorderradanordnung zusammenwirkenden Scheibenbremse gekoppelt, wobei das Vorderrad 15 mit der Scheibenbremse von einer Vorderradschutzhaube 16 überspannt ist. Das Vorderrad 15 ist an einer Einarmschwinge 17 aufgehängt, die ein Federelement 18 umfasst.

Die Hinterradanordnung 3 ist derart gestaltet, dass von der Sitzschale 1 zwei Befestigungsansätze 19 abgehen, an denen Befestigungsschwingen 20 formschlüssig angreifen, wobei die Befestigungsschwingen 20 mittels umfangsseitiger Spannschellen 21 an den Befestigungsansätzen 19 festgelegt werden. Zwischen der Befestigungsschwinge 20 einerseits und dem Befestigungsansatz 19 andererseits wirkt zur Sicherung eines Betätigers 32 der Spannschelle 21 ein Zugseil 22, dessen eines Ende im Inneren des Befestigungsansatzes 19 aushängbar festgelegt ist und dessen anderes Ende an einem der Befestigungsschwinge 20 zugeordneten Spannhebel 23 angeordnet ist. Nach dem Lösen der Spannschelle 21 und des Zugseils 22, ist die Befestigungsschwinge 20 mit dem zugeordneten Hinterrad 7 von der Sitzschale 1 entnehmbar. Im Weiteren lässt sich das Hinterrad 7 von der Achse 6 der Befestigungsschwinge 20 trennen. Der Betätiger 32 der Spannschelle 21 ist alternativ mittels eines nicht dargestellten Halteteils fixierbar.

Die Befestigungsschwinge 20 übergreift den Befestigungsansatz 19 und verriegelt kraft- und/oder formschlüssig.

Zur Federung der Hinterräder 7 gegenüber der Sitzschale 1 weist jeder Befestigungsansatz 19 ein Federelement 24 auf.

In der Sitzschale 1 ist eine Polsterung 33 angeordnet, die an die Körperkontur eines Insassen anpassbar ist bzw. sich an den Körper des Insassen anpasst. Die Polsterung 33 kann beispielsweise eine im wesentlichen luftundurchlässige Außenhülle mit einem Ventil 39 umfassen, wobei die Außenhülle mit einer Schüttung in Form kleiner Kugeln oder einem offenzelligen Polstermaterial oder dergleichen gefüllt ist und nach dem Platzieren des Insassen die Luft aus der Außenhülle evakuiert wird, damit sich die Polsterung 33 an den Körper des Insassen anschmiegt.

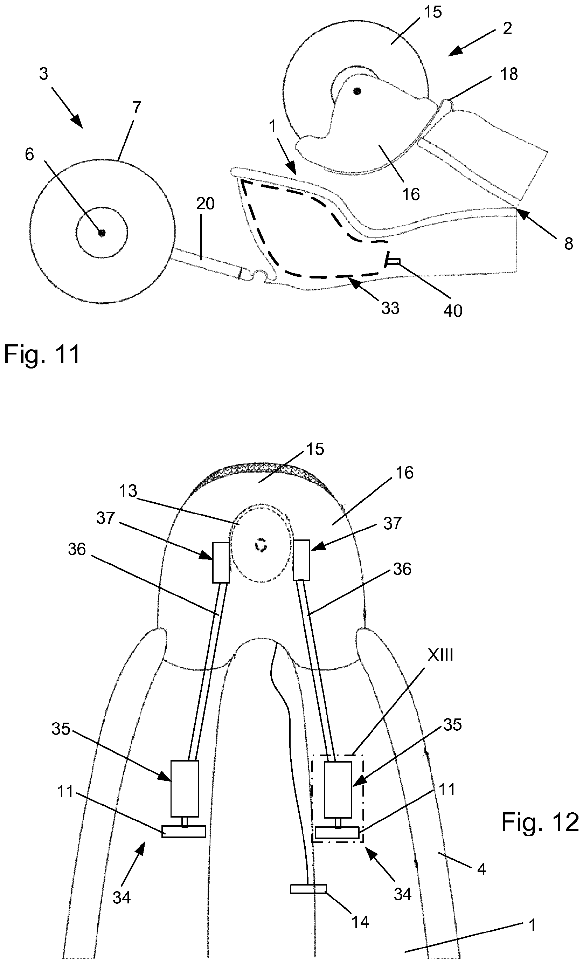

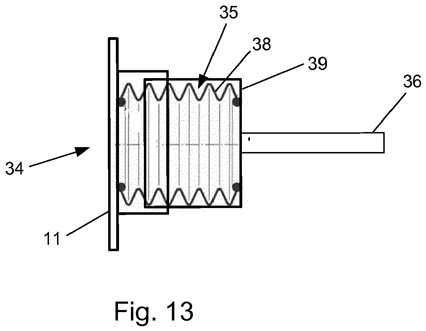

Zur alternativen Steuerung des Fahrzeugs sind gemäß den Fig. 12 und 13 innerhalb der Sitzschale 1 die beiden im Wesentlichen als Betätigerplatten dienenden Pedale 11 gelagert, die über eine Hydraulikeinrichtung 34 mit dem Lenkkopf 13 der Vorderradanordnung 2 zusammenwirken. Die Hydraulikeinrichtung 34 umfasst einen mit einer Hydraulikflüssigkeit gefüllten Behälter 35, der vorliegend als ein Faltenbalg 38 ausgebildet ist. Die Ausgestaltung des Behälters 35 ist hier nur beispielhaft dargestellt. Wichtig ist, dass der Behälter 35 derart gestaltet ist, dass bei einer Betätigung des zugeordneten Pedals 11 die Hydraulikflüssigkeit aus dem Behälter 35 verdrängt wird und durch eine mit dem Behälter 35 verbundene Hydraulikleitung 36 zu einem hydraulischen Betätiger 37 gelangt bzw. der hydraulisch Druck in dem Betätiger 37 ansteigt, um eine Beaufschlagung des Lenkkopfes 13 mit dem zugeordneten Vorderrad 15 zu bewirken. Vorliegend ist der Faltenbalg 38 zur Stabilisierung und zum Schutz vor einer Beschädigung in ein Gehäuse 39 eingesetzt.

**Bezugszeichen**

| | | | |
|---|---|---|---|
| 1. | Sitzschale | 22. | Zugseil |
| 2. | Vorderradanordnung | 23. | Spannhebel |
| 3. | Hinterradanordnung | 24. | Federelement |
| 4. | Rand | 25. | Schaumstoffüberzug |
| 5. | Mulde | 26. | Scharnier |
| 6. | Achse | 27. | Zwischenglied |
| 7. | Hinterrad | 28. | Arretierbolzen |
| 8. | Scharnieranordnung | 29. | Betätigungshebel |
| 9. | Seilzug | 30. | Teil von 1 |
| 10. | Lagergehäuse | 31. | Arretieröffnung |
| 11. | Pedale | 32. | Betätiger |
| 12. | Seilzugsystem | 33. | Polsterung |
| 13. | Lenkkopf | 34. | Hydraulikeinrichtung |
| 14. | Bremspedal | 35. | Behälter |
| 15. | Vorderrad | 36. | Hydraulikleitung |
| 16. | Vorderradschutzhaube | 37. | Betätiger |
| 17. | Einarmschwinge | 38. | Faltenbalg |
| 18. | Federelement | 39. | Gehäuse |
| 19. | Befestigungsansatz | 40. | Ventil |
| 20. | Befestigungsschwinge | | |
| 21. | Spannschelle | | |

## Patentansprüche

1. Fahrzeug, insbesondere Kite-Buggy, mit einer lenkbaren Vorderradanordnung (2) und mindestens einer Hinterradanordnung (3), wobei die Vorderradanordnung (2) und die Hinterradanordnung (3) an einer wannenförmigen Sitzschale (1) angeordnet sind, wobei die Sitzschale (1) an einem Ende zur Abstützung eines Lendenwirbelbereichs ausgebildet ist, und in einen Wannenbereich zur Beinauflage übergeht, **dadurch gekennzeichnet, dass** die Sitzschale (1) eine arretierbare Scharnieranordnung (8) zum Verschwenken der Vorderradanordnung (2) in die Sitzschale (1) umfasst.

2. Fahrzeug nach Anspruch 1, **dadurch gekennzeichnet, dass** die Scharnieranordnung (8) mindestens ein Scharnier (26) umfasst, das aus einem Gewebematerial im oberen Randbereich der Sitzschale (1) gebildet ist, und die Arretierung eine Bolzenanordnung mit Arretierbolzen (28) auf der einen Seite der Sitzschale (1) umfasst, wobei die Arretierbolzen (28) in zugeordnete Arretieröffnungen (31) auf der anderen Seite der Sitzschale (1) in einer in eine Gebrauchslage der Vorderradanordnung (2) verschwenkten Lage eingreifen.

3. Fahrzeug nach Anspruch 2, **dadurch gekennzeichnet, dass** die Arretierbolzen (28) mittels eines über Umlenkrollen geführten Seilzugs (9), der mit einem verschwenkbaren Betätigungshebel (29) verbunden ist, derart verlagerbar sind, dass die dem einen Teil (30) der Sitzschale (1) zugeordneten Arretierbolzen (28) in der einen Endlage mit dem gegenüberliegenden Teil (30) der Sitzschale (1) zugeordneten Arretieröffnungen (31) zur Arretierung der Sitzschale (1) in der Gebrauchsstellung zusammenwirken und in der anderen Endlage außer Eingriff mit den Arretieröffnungen (31) bringbar sind.

4. Fahrzeug nach Anspruch 2 oder 3, **dadurch gekennzeichnet, dass** mindestens ein Fallenschloss zwischen den beiden zueinander zu verschwenkenden Teilen (30) der Sitzschale (1) angeordnet ist.

5. Fahrzeug nach Anspruch 2, **dadurch gekennzeichnet, dass** die federbeaufschlagten Arretierbolzen (28) über den Seilzug (9) derart miteinander verbunden sind, dass sie beim Verschwenken des Betätigungshebels (29) entgegen der Federwirkung außer Eingriff mit den Arretieröffnungen (31) in eine in das Lagergehäuse (10) eingezogene Stellung gebracht werden und nach dem Loslassen des Betätigungshebels (29) aufgrund der Federwirkung in eine aus dem Lagergehäuse (10) ausgefahrene Stellung zurückkehren.

6. Fahrzeug nach einem der Ansprüche 1 bis 5, **dadurch gekennzeichnet, dass** die Sitzschale (1) im Anlenkungsbereich der Hinterradanordnung (3) zur Aufnahme der Gesäßregion ausgebildet ist, wobei in diesem hinteren Bereich der Sitzschale (1) der tiefste Punkt unterhalb der Achse (6) mindestens eines der Hinterräder (7) angeordnet ist.

7. Fahrzeug nach einem der Ansprüche 1 bis 6, **dadurch gekennzeichnet, dass** die Sitzschale (1) aus einem faserverstärkten Kunststoffmaterial gefertigt ist.

8. Fahrzeug nach einem der Ansprüche 1 bis 7, **dadurch gekennzeichnet, dass** in der Sitzschale (1) eine Polsterung (33) angeordnet ist, die an die Körperkontur eines Insassen anpassbar ist.

9. Fahrzeug nach einem der Ansprüche 1 bis 8, **dadurch gekennzeichnet, dass** jedes der Hinterräder (7) mittels einer Befestigungsschwinge (20) der Hinterradanordnung (3) mit der Sitzschale (1) derart verbunden ist, dass die Befestigungsschwinge (20) von einem sitzschalenfesten Befestigungsansatz (19) lösbar ist und ein Federelement (24) aufweist oder als ein Federelement (24) ausgebildet ist.

10. Fahrzeug nach Anspruch 9, **dadurch gekennzeichnet, dass** die Hinterräder (7) von Achsen (6) der Befestigungsschwingen (20) lösbar sind.

11. Fahrzeug nach einem der Ansprüche 1 bis 10, **dadurch gekennzeichnet, dass** die Sitzschale (1) in ihrem zum Vorderrad (15) weisenden Bereich auf gegenüberliegenden Seiten zwei Pedale (11) aufweist, die mit einem Seilzugsystem (12) oder einer Hydraulikeinrichtung zur Lenkung des Vorderrades (15) verbunden sind, und/oder mindestens ein Bremspedal (14) lagert.

12. Fahrzeug nach Anspruch 11, **dadurch gekennzeichnet, dass** die mit der Hydraulikeinrichtung (34) zur Lenkung des Vorderrades (15) verbundenen Pedale (11) mit jeweils einem durch eine Betätigung mit dem zugeordneten Pedal (11) in seinem Volumen verringerbaren Behälter (35) für eine Hydraulikflüssigkeit gekoppelt sind, wobei jeder Behälter (35) über eine Hydraulikleitung (36) mit einem einem Lenkkopf (13) der Lenkung zugeordneten hydraulischen Betätiger (37) zu dessen Verdrehung zugeordnet ist.

13. Fahrzeug nach einem der Ansprüche 1 bis 12, **dadurch gekennzeichnet, dass** die Vorderradanordnung (2) eine federnd gelagerte oder eine ein Federelement (18) aufweisende Einarmschwinge (17) sowie eine hydraulisch betätigte Scheibenbremse umfasst, die unter einer Vorderradschutzhaube (16) angeordnet ist.

14. Fahrzeug nach einem der Ansprüche 11 oder 12, oder nach Anspruch 13 wenn abhängig von Anspruch 11, **dadurch gekennzeichnet, dass** die Vorderradanordnung (2) ein Lenkkopflager umfasst, das mit dem Seilsystem (12) oder der Hydraulikeinrichtung zusammenwirkt.

15. Fahrzeug nach einem der Ansprüche 1 bis 14, **dadurch gekennzeichnet, dass** mindestens ein Vorderrad (15) der Vorderradanordnung (2) und mindestens ein Hinterrad (7) der Hinterradanordnung (3) durch eine Kufe zum Eisgleiten, einen Ski zum Schneegleiten, oder ein Tragprofil zum Wassergleiten ersetzbar sind.

## Claims

1. Vehicle, in particular kite buggy, having a steerable front-wheel arrangement (2) and at least one rear-wheel arrangement (3), wherein the front-wheel arrangement (2) and the rear-wheel arrangement (3) are arranged on a bucket-like seat (1), wherein the seat (1), at one end, is designed for supporting a lumbar region, and merges into a bucket region for supporting the legs, **characterized in that** the seat (1) comprises an arrestable hinge arrangement (8) for pivoting the front-wheel arrangement (2) into the seat (1).

2. Vehicle according to Claim 1, **characterized in that** the hinge arrangement (8) comprises at least one hinge (26), which is formed from a woven-fabric material in the upper peripheral region of the seat (1), and the arresting mechanism comprises a pin arrangement with arresting pins (28) on the one side of the seat (1), wherein the arresting pins (28) engage in associated arresting openings (31) on the other side of the seat (1) in a position in which pivoting into a use position of the front-wheel arrangement (2) has taken place.

3. Vehicle according to Claim 2, **characterized in that** the arresting pins (28) can be displaced by means of a cable pull (9), which is guided over deflecting rollers and is connected to a pivotable actuating lever (29), such that, in the one end position, the arresting pins (28), which are assigned to the one part (30) of the seat (1), interact with arresting openings (31), which are assigned to the opposite part (30) of the seat (1), in order to arrest the seat (1) in the use position and, in the other position, said arresting pins can be disengaged from the arresting openings (31).

4. Vehicle according to Claim 2 or 3, **characterized in that** at least one latch-type lock is arranged between the two parts (30) of the seat (1), it being possible for said two parts to be pivoted in relation to one another.

5. Vehicle according to Claim 2, **characterized in that** the spring-loaded arresting pins (28) are connected to one another via the cable pull (9) such that, when the actuating lever (29) is pivoted, they are disengaged from the arresting openings (31), counter to the spring action, into a position in which they are retracted into the bearing housing (10) and, once the actuating lever (29) has been released, they return, under the spring action, into a position in which they are extended out of the bearing housing (10).

6. Vehicle according to one of Claims 1 to 5, **characterized in that**, in the region of articulation of the rear-wheel arrangement (3), the seat (1) is designed to accommodate the occupant's bottom, wherein, in this rear region of the seat (1), the lowermost point is arranged beneath the axle (6) of at least one of the rear wheels (7).

7. Vehicle according to one of Claims 1 to 6, **characterized in that** the seat (1) is produced from a fibre-reinforced plastic material.

8. Vehicle according to one of Claims 1 to 7, **characterized in that** an upholstery arrangement (33), which can be adapted to the contour of an occupant's body, is arranged in the seat (1).

9. Vehicle according to one of Claims 1 to 8, **characterized in that** each of the rear wheels (7) is connected to the seat (1) by means of a fastening swingarm (20) of the rear-wheel arrangement (3) such that the fastening swingarm (20) can be detached from a seat-mounted fastening extension (19) and has a spring element (24) or is designed in the form of the spring element (24).

10. Vehicle according to Claim 9, **characterized in that** the rear wheels (7) can be detached from axles (6) of the fastening swingarms (20).

11. Vehicle according to one of Claims 1 to 10, **characterized in that** the seat (1), on opposite sides of its region which is oriented towards the front wheel (15), has two pedals (11), which are connected to a cable-pull system (12) or a hydraulic device for steering the front wheel (15), and/or bears at least one brake pedal (14).

12. Vehicle according to Claim 11, **characterized in that** the pedals (11), which are connected to the hydraulic device (34) for steering the front wheel (15), are coupled to a respective hydraulic-fluid tank (35), which can be reduced in volume by actuation by the associated pedal (11), wherein each tank (35) is assigned, via a hydraulic line (36), to a hydraulic actuator (37) for rotation of the same, said actuator being assigned to a steering head (13) of the steering system.

13. Vehicle according to one of Claims 1 to 12, **characterized in that** the front-wheel arrangement (2) comprises a resiliently mounted single-sided swingarm (17), or a single-sided swingarm (17) which has a spring element (18), and also a hydraulically actuated disc brake, which is arranged beneath a front-wheel guard (16).

14. Vehicle according to either of Claims 11 and 12 or according to Claim 13, if dependent on Claim 11, **characterized in that** the front-wheel arrangement (2) comprises a steering-head bearing which interacts with the cable system (12) or the hydraulic device.

15. Vehicle according to one of Claims 1 to 14, **characterized in that** at least one front wheel (15) of the front-wheel arrangement (2) and at least one rear wheel (7) of the rear-wheel arrangement (3) can be replaced by a runner for travelling over ice, by a ski for travelling over snow or by a supporting profile for travelling over water.

## Revendications

1. Véhicule, en particulier char à cerf-volant, comprenant un agencement de roue avant (2) et au moins un agencement de roue arrière (3), l'agencement de roue avant (2) et l'agencement de roue arrière (3) étant disposés sur une coque de siège en forme de cuvette (1), la coque de siège (1) étant réalisée à une extrémité pour supporter une région de la colonne lombaire, et se prolongeant dans une région de cuvette pour supporter les jambes,
**caractérisé en ce que** la coque de siège (1) comprend un agencement de charnière (8) pouvant être verrouillé pour faire pivoter l'agencement de roue avant (2) dans la coque de siège (1).

2. Véhicule selon la revendication 1, **caractérisé en ce que** l'agencement de charnière (8) comprend au moins une charnière (26) qui est formée d'un matériau en tissu dans la région de bord supérieure de la coque de siège (1), et le verrouillage comprend un agencement de boulon avec un boulon de verrouillage (28) sur un côté de la coque de siège (1), les boulons de verrouillage (28) s'engageant dans des ouvertures de verrouillage associées (31) de l'autre côté de la coque de siège (1) dans une position pivotée dans une position d'utilisation de l'agencement de roue avant (2).

3. Véhicule selon la revendication 2, **caractérisé en ce que** le boulon de verrouillage (28) peut être déplacé au moyen d'un câble Bowden (9) guidé par le biais de poulies de renvoi, qui est connecté à un levier d'actionnement pivotant (29), de telle sorte que les boulons de verrouillage (28) associés à l'une des parties (30) de la coque de siège (1) coopèrent dans l'une des positions d'extrémité avec des ouvertures de verrouillage (31) associées à la partie opposée (30) de la coque de siège (1) pour bloquer la coque de siège (1) dans la position d'utilisation, et puissent être amenés dans l'autre position d'extrémité hors d'engagement avec les ouvertures de verrouillage (31) .

4. Véhicule selon la revendication 2 ou 3, **caractérisé en ce qu'**au moins une serrure à pêne est disposée entre les deux parties (30) de la coque de siège (1) devant être pivotées l'une par rapport à l'autre.

5. Véhicule selon la revendication 2, **caractérisé en ce que** les boulons de verrouillage (28) sollicités par ressort sont connectés les uns aux autres par le biais du câble Bowden (9) de telle sorte qu'ils soient amenés lors du pivotement du levier d'actionnement (29) à l'encontre de l'action de ressort hors d'engagement avec les ouvertures de verrouillage (31) dans une position rentrée dans le logement de palier (10) et qu'après le relâchement du levier d'actionnement (29), ils reviennent sous l'effet de l'action de ressort dans une position sortie hors du logement de palier (10).

6. Véhicule selon l'une quelconque des revendications 1 à 5, **caractérisé en ce que** la coque de siège (1), dans la région d'articulation de l'agencement de roue arrière (3), est réalisée pour recevoir la région des fesses, le point le plus bas en dessous de l'axe (6) d'au moins l'une des roues arrière (7) étant disposé dans cette région arrière de la coque de siège (1).

7. Véhicule selon l'une quelconque des revendications 1 à 6, **caractérisé en ce que** la coque de siège (1) est fabriquée en matière plastique renforcée par des fibres.

8. Véhicule selon l'une quelconque des revendications 1 à 7, **caractérisé en ce qu'**un rembourrage (33) est disposé dans la coque de siège (1), lequel peut être adapté au contour du corps d'un occupant.

9. Véhicule selon l'une quelconque des revendications 1 à 8, **caractérisé en ce que** chacune des roues arrière (7) est connectée au moyen d'un bras oscillant de fixation (20) de l'agencement de roue arrière (3) à la coque de siège (1) de telle sorte que le bras oscillant de fixation (20) puisse être détaché d'un appendice de fixation (19) fixé à la coque de siège et présente un élément de ressort (24) ou est réalisé sous forme d'élément de ressort (24).

10. Véhicule selon la revendication 9, **caractérisé en ce que** les roues arrière (7) peuvent être détachées des axes (6) des bras oscillants de fixation (20).

11. Véhicule selon l'une quelconque des revendications 1 à 10, **caractérisé en ce que** la coque de siège (1) présente, dans sa région tournée vers la roue avant (15), sur des côtés opposés, deux pédales (11) qui sont connectées par un système de câbles Bowden (12) ou par un dispositif hydraulique pour diriger la roue avant (15), et/ou supporte au moins une pédale de frein (14).

12. Véhicule selon la revendication 11, **caractérisé en ce que** les pédales (11) connectées au dispositif hydraulique (34) pour diriger la roue avant (15) sont à chaque fois accouplées à un récipient (35) pour un liquide hydraulique dont le volume peut être réduit par un actionnement avec la pédale associée (11), chaque récipient (35) étant associé par le biais d'une conduite hydraulique (36), pour sa rotation, à un dispositif d'actionnement (37) hydraulique associé à une tête de direction (13) de la direction.

13. Véhicule selon l'une quelconque des revendications 1 à 12, **caractérisé en ce que** l'agencement de roue avant (2) comprend un bras oscillant à un bras (17) monté sur ressort ou présentant un élément de ressort (18) ainsi qu'un frein à disque à commande hydraulique, qui est disposé en dessous d'un capot de protection de la roue avant (16).

14. Véhicule selon l'une quelconque des revendications 11 ou 12, ou selon la revendication 13 lorsqu'elle dépend de la revendication 11, **caractérisé en ce que** l'agencement de roue avant (2) comprend un palier de tête de direction qui coopère avec le système de câble (12) ou avec le dispositif hydraulique.

15. Véhicule selon l'une quelconque des revendications 1 à 14, **caractérisé en ce qu'**au moins une roue avant (15) de l'agencement de roue avant (2) et au moins une roue arrière (7) de l'agencement de roue arrière (3) peut être remplacé par un patin pour glisser sur la glace, un ski pour glisser sur la neige ou un profilé porteur pour glisser sur l'eau.
